# EUROPÄISCHE PATENTSCHRIFT

(11) **EP 1 801 072 B1**
(45) Veröffentlichungstag und Bekanntmachung des Hinweises auf die Patenterteilung: **10.12.2008**
(21) Anmeldenummer: 06021119.0
(22) Anmeldetag: 09.10.2006
(51) Int. Cl.: C01B 31/08

(54) **Aktivkohle mit katalytischer Aktivität**
Actived carbon with catalytic activity
Charbon actif possédant une activité catalytique

(30) Priorität: 20.12.2005 DE 102005061252; 09.03.2006 DE 102006010862
(43) Veröffentlichungstag der Anmeldung: 27.06.2007
(73) Patentinhaber: Blücher GmbH, 40699 Erkrath (DE)
(72) Erfinder: De Ruiter, Ernest, 51381 Leverkursen (DE)
(74) Vertreter: Gesthuysen, von Rohr & Eggert

(56) Entgegenhaltungen:
- WO-A-01/83368
- DE-A1- 3 510 209
- DE-A1- 4 304 026
- DE-A1- 4 328 219
- DE-A1- 10 020 921
- DE-A1- 10 065 936
- US-A- 4 065 442

## Beschreibung

Die vorliegende Erfindung betrifft ein Verfahren zur Herstellung einer Aktivkohle mit katalytischer Aktivität, insbesondere in Kugelform ("Kugelkohle"), sowie die auf diese Weise hergestellte Aktivkohle und ihre Verwendung für verschiedenste Anwendungsbereiche, insbesondere für Filter oder für Schutzmaterialien, wie beispielsweise Schutzanzüge und anderweitige Schutzbekleidungsstücke (z. B. Schutzschuhwerk, Schutzhandschuhe, Schutzsocken, Schutzunterbekleidung, Schutzkopfbedeckung etc.).

Aktivkohle ist aufgrund ihrer recht unspezifischen adsorptiven Eigenschaften das am meisten angewandte Adsorbens. Gesetzliche Auflagen, aber auch das steigende Bewußtsein der Verantwortung für die Umwelt führen zu einem steigenden Bedarf an Aktivkohle.

Aktivkohle wird im allgemeinen durch Carbonisierung (synonym auch als Pyrolyse oder aber Schwelung bezeichnet) und nachfolgende Aktivierung geeigneter kohlenstoffhaltiger Ausgangsverbindungen hergestellt, wobei solche Ausgangsverbindungen bevorzugt werden, die zu ökonomisch vernünftigen Ausbeuten führen. Denn die Gewichtsverluste durch Abspalten flüchtiger Bestandteile bei der Carbonisierung und durch den gezielten Abbrand beim Aktivieren sind erheblich.

Für weitere Einzelheiten zur Herstellung von Aktivkohle kann beispielsweise verwiesen werden auf H. v. Kienle und E. Bäder, "Aktivkohle und ihre industrielle Anwendung", Enke Verlag Stuttgart, 1980.

Die Beschaffenheit der erzeugten Aktivkohle - fein- oder grobporig, fest oder brüchig, kom- oder kugelförmig - hängt vom Ausgangsmaterial ab. Übliche Ausgangsmaterialien sind Kokosnußschalen, Holzabfälle, Torf, Steinkohle, Peche, aber auch besondere Kunststoffe, die unter anderem bei der Herstellung von Aktivkohlegeweben eine gewisse Rolle spielen. Darüber hinaus werden als Ausgangsmaterialien auch organische Polymere verwendet.

Aktivkohle wird in verschiedenen Formen verwendet: Pulverkohle, Splittkohle, Kornkohle, Formkohle und seit Ende der 1970er Jahre auch kugelförmige Aktivkohle ("Kugelkohle"). Kugelförmige Aktivkohle hat gegenüber anderen Formen von Aktivkohle eine Reihe von Vorteilen, die sie für bestimmte Applikationen wertvoll oder sogar unverzichtbar macht: Sie ist rieselfähig, enorm abriebfest, staubfrei und sehr hart.

Kugelkohle kann durch verschiedene Verfahren hergestellt werden:

Ein Verfahren zur Herstellung von Kugelkohle besteht in der Herstellung von Kügelchen aus Steinkohlenteerpech und geeigneten asphaltartigen Rückständen der Erdölchemie, welche oxidiert werden, um sie unschmelzbar zu machen, anschließend geschwelt und nachfolgend aktiviert werden. Alternativ kann die Kugelkohle auch in einem mehrstufigen Verfahren ausgehend von Bitumen hergestellt werden. Diese mehrstufigen Verfahren sind sehr kostenintensiv, und der damit verbundene hohe Preis der Kugelkohle verhindert viele Anwendungen, bei denen die Kugelkohle aufgrund ihrer Eigenschaften eigentlich bevorzugt werden müßte.

Folglich wurde versucht, hochwertige Kugelkohle auf anderem Wege herzustellen: So ist es aus dem Stand der Technik bekannt, Aktivkohle in Form von Aktivkohlekügelchen durch Carbonisierung und anschließende Aktivierung von ungebrauchten oder gebrauchten Ionenaustauschern auf Basis von Styrol/Divinylbenzol-Harzen, die Sulfonsäuregruppen enthalten, bzw. durch Carbonisierung von Ionenaustauschervorstufen in Gegenwart von Schwefelsäure und nachfolgende Aktivierung herzustellen, wobei die Sulfonsäuregruppen bzw. die Schwefelsäure die Funktion eines Vernetzers haben. Solche Verfahren sind beispielsweise in der DE 43 28 219 A1 und in der DE 43 04 026 A1 sowie in der DE 196 00 237 A1 einschließlich der deutschen Zusatzanmeldung DE 196 25 069 beschrieben, Weiterhin kann in diesem Zusammenhang die WO 01183368 A1 genannt werden.

Ferner ist aus der WO 98/07655 A1 ein Verfahren zur Herstellung von Aktivkohlekügelchen bekannt, bei dem zunächst eine Mischung, die einen aus der Diisocyanatherstellung stammenden Destillationsrückstand, einen kohlenstoffhaltigen Verarbeitungshilfsstoff und gegebenenfalls einen oder mehrere weitere Zusatzstoffe umfaßt, zu rieselförmigen Kügelchen verarbeitet wird und anschließend die auf diese Weise erhaltenen Kügelchen geschwelt und dann aktiviert werden.

Die auf die vorgenannte Weise hergestellte kugelförmige Aktivkohle kann beispielsweise in Schutzanzügen, insbesondere sogenannten ABC-Schutzanzügen für den militärischen oder Zivilschutzeinsatz, verwendet werden. So kann die Aktivkohle insbesondere in permeablen, luftdurchlässigen, adsorptiv wirkenden Schutzanzügen zum Einsatz kommen. Derartige Schutzanzüge besitzen zwar eine gute Schutzwirkung in bezug auf chemische Gifte, wie Kampfstoffe (z. B. Senfgas bzw, Lost), aber oftmals eine nur unzureichende Schutzwirkung im Hinblick auf biologische Schadstoffe,

Daher werden derartige permeable, adsorptiv wirkende Filtersysteme auf Basis von Aktivkohle oft mit einer katalytisch aktiven Komponente ausgerüstet, indem die Aktivkohle mit einem biozid bzw. biostatisch wirkenden Katalysator, insbesondere auf Basis von Metallen oder Metallverbindungen, ausgestattet, insbesondere imprägniert wird.

Ein derartiges Schutzmaterial ist beispielsweise in der DE 195 19 869 A1 beschrieben, welche ein mehrlagiges, textiles, gasdurchlässiges Filtermaterial mit einer Adsorptionsschicht auf Basis von Aktivkohle, insbesondere in Form von carbonisierten Fasern, enthält, die mit einem Katalysator aus der Gruppe von Kupfer, Cadmium, Platin, Palladium, Quecksilber und Zink in Mengen von 0,05 bis 12 Gew.-%, bezogen auf das Aktivkohlematerial, imprägniert ist. Das nachträgliche Imprägnieren von Aktivkohle ist jedoch ein aufwendiger Prozeß, da die bereits fertig hergestellte Aktivkohle mit einem geeigneten Imprägnierreagenz, im allgemeinen einer Lösung oder Dispersion des Imprägniermetalls oder der Imprägniermetallverbindung, in Kontakt gebracht und nachfolgend noch einmal getrocknet werden muß. Durch den Imprägnierprozeß wird somit die Leistungsfähigkeit der eingesetzten Aktivkohle nachteilig beeinträchtigt. Weiterhin benötigt der Imprägnierprozeß relativ große Mengen an Imprägniermetall. Schließlich ist ein weiterer Nachteil der nachträglichen Imprägnierung darin zu sehen, daß diese nicht homogen über die gesamte Aktivkohle, insbesondere nicht homogen über sämtliche Poren (Makro-, Meso- und Mikroporen), erfolgt. Schlußendlich beeinträchtigt die nachträgliche Imprägnierung auch die Adsorptionskapazität, da Poren der Aktivkohle teilweise mit dem Imprägnierreagenz verstopft bzw, blockiert werden und somit nicht mehr für den Adsorptionsprozeß zur Verfügung stehen.

Es ist daher die Aufgabe der vorliegenden Erfindung, ein Verfahren zur Herstellung von Aktivkohle mit katalytischer Aktivität bereitzustellen, welches die zuvor geschilderten Nachteile des Standes der Technik zumindest weitgehend vermeidet oder aber wenigstens abschwächt.

Insbesondere ist eine Aufgabe der vorliegenden Erfindung die Bereitstellung eines Herstellungsverfahrens für eine Aktivkohle, die mit einem Imprägnier- bzw. Dotiermetall ausgestattet ist.

Das zuvor geschilderte Problem wird im Rahmen der vorliegenden Erfindung durch ein Verfahren nach Anspruch 1 gelöst. Weitere, vorteilhafte Ausgestaltungen des erfindungsgemäßen Verfahrens sind Gegenstand der diesbezüglichen Verfahrensunteransprüche.

Weiterer Gegenstand der vorliegenden Erfindung ist die auf diese Weise hergestellte Aktivkohle, wie in den Ansprüchen 8 und 9 beschrieben.

Wiederum ein weiterer Gegenstand der vorliegenden Erfindung ist die Verwendung der erfindungsgemäß hergestellten Aktivkohle gemäß Anspruch 10.

Schließlich sind ein weiterer Gegenstand der vorliegenden Erfindung die unter Verwendung der erfindungsgemäß erhältlichen Aktivkohle hergestellten Produkte, insbesondere Adsorptionsmaterialien, gemäß Anspruch 11.

Gegenstand der vorliegenden Erfindung - gemäß einem ersten Aspekt - ist somit ein Verfahren zur Herstellung von Aktivkohle mit katalytischer Aktivität bzw. mit metallischer Ausrüstung durch Carbonisierung und nachfolgende Aktivierung kohlenstoffhaltiger organischer Polymere, wobei kohlenstoffhaltige organische Polymere, in die bei deren Herstellung mindestens ein Metall, vorzugsweise in Form eines Metallatoms und/oder Metallions, einpolymerisiert worden ist, einer Carbonisierung und nachfolgenden Aktivierung unterzogen werden, so daß eine mit dem Metall, insbesondere Metallatom und/oder Metallion, beladene Aktivkohle resultiert.

Mit anderen Worten betrifft die vorliegende Erfindung ein Verfahren zur Herstellung von Aktivkohle, welche mit einem Metall, vorzugsweise in Form eines Metallatoms und/oder Metallions, ausgerüstet wird, bei dem zunächst mittels Polymerisation kohlenstoffhaltige organische Polymere hergestellt werden, in die mindestens ein Metall, vorzugsweise in Form eines Metallatoms und/oder Metallions, einpolymerisiert wird, und in einem nachfolgenden Schritt die auf diese Weise hergestellten, metallbeladenen, kohlenstoffhaltigen organischen Polymere einer Carbonisierung und nachfolgenden Aktivierung unterzogen werden.

Aufgrund der Tatsache, daß bereits die Ausgangsmaterialien, d. h. die kohlenstoffhaltigen organischen Polymere, bei ihrer Herstellung mit dem gewünschten Metall ausgerüstet werden, entfällt eine aufwendige Imprägnierung nach Herstellung der Aktivkohle. Durch die Ausstattung bereits der polymeren Ausgangsmaterialien mit dem Metall läßt sich zudem eine homogenere Beladung erreichen, und dies homogen über alle Arten von Poren (Makro-, Mesowie Mikroporen) der Aktivkohle, so daß die katalytische Aktivität erhöht ist.

Überraschenderweise hat die Anmelderin gefunden, daß die Wirksamkeit gegenüber biologischen und chemischen Giften - im Vergleich zu einer herkömmlich imprägnierten Aktivkohle - erhöht ist, da im Falle der erfindungsgemäß hergestellten Aktivkohle geringere Mengen an Metall bei gleicher Wirksamkeit benötigt werden.

Weiterhin ist überraschend, daß die Metalle, insbesondere Metallatome und/oder Metallionen, in den organischen Ausgangspolymeren die nachfolgende Carbonisierung und Aktivierung nicht negativ beeinträchtigen. Vielmehr hat die Anmelderin überraschender Weise herausgefunden, daß - vollkommen unerwartet - die Gegenwart der Metalle in den Ausgangsverbindungen den nachfolgenden Prozeß insbesondere der Aktivierung beschleunigt: Die Aktivierung ist in kürzeren Zeitdauern abgeschlossen im Vergleich zu einer nichtmetallbeladenen Kohle. Dies war in keiner Weise zu erwarten.

Mit der Einpolymerisierung der Metalle bereits in die kohlenstoffhaltigen organischen Ausgangspolymere bei deren Herstellung ist somit eine Vielzahl von Vorteilen verbunden, welche sich nicht nur in verfahrenstechnischer Hinsicht, sondern auch in den Produkten niederschlagen, wie zuvor erläutert (z. B. homogenere gleichmäßigere Beladung sowie erhöhte katalytische Aktivität).

Erfindungsgemäß geeignete, kohlenstoffhaltige organische Ausgangspolymere können insbesondere ausgewählt sein aus der Gruppe von Polystyrolpolymeren, insbesondere Polystyrol/Acrylat-Copolymeren und Polystyrol/Divinylbenzol-Copolymeren, vorzugsweise divinylbenzolvemetzten Polystyrolen; Formaldehyd/Phenolharz-Copolymeren, insbesondere formaldehydvernetzten Phenolharzen; Cellulose, insbesondere Perlcellulose; sowie Mischungen der vorgenannten Verbindungen.

Als kohlenstoffhaltige organische Ausgangspolymere besonders bevorzugt sind Polystyrolpolymere, insbesondere Polystyrol/Divinylbenzol-Copolymere, vorzugsweise divinylbenzolvernetzte Polystyrole. Erfindungsgemäß bevorzugt eingesetzte Polymere weisen einen Divinylbenzolgehalt von 1 bis 20 Gew.-%, vorzugsweise 4 bis 18 Gew.-%, bezogen auf die Polymere, auf. Während bei divinylbenzolvernetzten Polystyrolen vom Geltyp als Ausgangspolymeren ein relativ geringer Divinylbenzolgehalt von 2 bis 6 Gew.-%; insbesondere 3 bis 5 Gew.-%, bevorzugt wird, wird dagegen bei makroporösen divinylbenzolvernetzten Polystyrolen als Ausgangspolymeren ein relativ hoher Divinylbenzolgehalt von 15 bis 20 Gew.-%, insbesondere 17 bis 19 Gew.-%, bevorzugt.

Erfindungsgemäß ist es bevorzugt, wenn die eingesetzten Polymere kornförmig, insbesondere kugelförmig, ausgebildet sind. Auf diese Weise läßt sich kornförmige, insbesondere kugelförmige, Aktivkohle herstellen. Vorzugsweise haben die eingesetzten Ausgangspolymere mittlere Durchmesser im Bereich von 0,01 bis 2,0 mm, insbesondere 0,05 bis 1,5 mm, vorzugsweise 0,1 bis 1,0 mm - was dann zu den entsprechend dimensionierten Aktivkohlepartikeln führt.

Die Herstellung der Ausgangspolymere bzw. die Polymerisation erfolgt in dem Fachmann an sich bekannter Art und Weise. Zu diesem Zweck werden die Ausgangsmonomere in Gegenwart der Metalle, insbesondere der Metallatome und/oder Metallionen, vorzugsweise Metallionen, zur Polymerisation gebracht. Das oder die Metallatome und/oder Metallionen werden zu diesem Zweck dem Polymerisationsgemisch zugesetzt, vorzugsweise in Form einer in dem Polymerisationsgemisch löslichen oder zumindest dispergierbaren Metallverbindung; dann wird das zu polymerisierende Ausgangsgemisch in Gegenwart des oder der Metalle zur Polymerisation gebracht. Dies kann beispielsweise durch Dispersions- oder Emulsionpolymerisation, insbesondere radikalische Polymerisation, erfolgen. So kann beispielsweise bei der Herstellung von divinylbenzolvernetzten Polystyrolen eine Ausgangsmischung von Polystyrol und Divinylbenzol (z. B. 1 bis 10 Gew.-% Divinylbenzolanteil in bezug auf das Gemisch) sowie Metallverbindung (z. B. Kupfer- und/oder Silberbehenat oder -(meth)acrylat) in Gegenwart eines Radikalstarters und gegebenenfalls eines Porenbildners in an sich bekannter Weise radikalisch polymerisiert werden, so daß die gewünschten, metallbeladenen organischen Ausgangspolymere resultieren. Erfindungsgemäß bevorzugt werden als MetallVerbindungen, in Gegenwart derer die Polymerisation durchgeführt wird, organische Verbindungen der entsprechenden Metalle eingesetzt, insbesondere die Metallsalze organischer Säuren (z. B. Behenate, Acrylate, Methacrylate etc.), da diese sich besonders homogen einpolymerisieren lassen. Für weitere Einzelheiten zu der Herstellung der organischen Ausgangspolymere als solcher kann beispielsweise auf die US-A-4 040 990 und die US-A-4 382 124 verwiesen werden, deren gesamter diesbezüglicher Offenbarungsgehalt hiermit durch Bezugnahme eingeschlossen ist.

Das Metall, insbesondere Metallatom und/oder Metallion, kann in variablen Mengen eingesetzt werden. Insbesondere wird es in solchen Mengen eingesetzt, daß das resultierende Polymer das oder die Metalle, insbesondere Metallatome und/oder Metallionen, in Mengen von 0,001 bis 10 Gew.-%, insbesondere 0,005 bis 5 Gew.-%, bevorzugt 0,01 bis 3 Gew.-%, bezogen auf das Polymer, enthält.

Wie zuvor beschrieben, enthält das auf diese Weise hergestellte, kohlenstoffhaltige organische Polymer, welches nachfolgend einer Carbonisierung und anschließenden Aktivierung unterzogen werden soll, mindestens ein Metall, vorzugsweise in Form eines Metallatoms und/oder Metallions. Mit der Formulierung "mindestens ein Metall" ist zu verstehen, daß das kohlenstoffhaltige organische Polymer mindestens eine Spezies bzw. mindestens eine Sorte von Metall, insbesondere Metallatom und/oder Metallion, enthält. Gleichermaßen ist es möglich, voneinander verschiedene Metalle, insbesondere Metallatome und/oder Metallionen, einzupolymerisieren (z. B. Mischungen von Kupfer- und Silberionen etc.).

Was das Metall anbelangt, so ist dieses insbesondere ausgewählt aus der Gruppe von Kupfer, Silber, Cadmium, Platin, Palladium, Rhodium, Zink, Quecksilber, Titan, Zirkonium und/oder Aluminium und/oder deren Mischungen sowie der Ionen und/oder Salzen. Bevorzugt sind Kupfer und/oder Silber sowie deren Ionen und/oder Salze.

Die auf diese Weise hergestellten, metallatombeladenen, kohlenstoffhaltigen organischen Polymere werden dann einer Carbonisierung und nachfolgenden Aktivierung unterzogen. Carbonisierung und Aktivierung erfolgen in an sich bekannter Art und Weise. Diesbezüglich kann auf die eingangs genannten Druckschriften DE 43 28 219 A1, DE 43 04 026 A1, DE 196 00 237 A1, DE 196 25 069 A1 und WO 01/83368 A1 verwiesen werden, deren gesamter diesbezüglicher Offenbarungsgehalt hiermit durch. Bezugnahme, eingeschlossen ist.

Um hohe Ausbeuten bei der Aktivkohleherstellung zu erhalten, werden vorteilhafterweise solche Ausgangspolymere eingesetzt, welche chemische Gruppen enthalten, die bei ihrer chemischen Zersetzung, insbesondere unter Carbonisierungsbedingungen, zu freien Radikalen und somit zu Vernetzungen führen, insbesondere Sulfonsäure- und/oder Isocyanatgruppen, vorzugsweise Sulfonsäuregruppen. Solche chemischen Gruppen, insbesondere Sulfonsäuregruppen, können bereits in den eingesetzten Ausgangspolymeren vorhanden sein, sofern sulfonierte Ausgangsmonomere für die Polymerisation eingesetzt werden bzw. die hergestellten Ausgangspolymere nach ihrer Polymerisation sulfoniert werden. Erfindungsgemäß ist es aber bevorzugt, wenn diese chemischen Gruppen, insbesondere Sulfonsäuregruppen, erst vor und/oder bei der Carbonisierung eingeführt werden. Dies geschieht durch Zugabe eines Sulfonierungsreagenzes, vorzugsweise SO₃, zu den Ausgangspolymeren (z. B. durch Imprägnieren, Tränken oder Benetzen). Bevorzugt wird das SO₃ in Form von insbesondere konzentrierter Schwefelsäure und/oder Oleum, besonders bevorzugt in Form einer Mischung von konzentrierter Schwefelsäure und Oleum, eingesetzt. Dies ist dem Fachmann als solches bekannt. Beispielsweise kann in diesem Zusammenhang auf die vorgenannte WO 01/83368 A1, die DE 196 25 069 A1 und die DE 196 00 237 A1 verwiesen werden, deren gesamter diesbezüglicher Offenbarungsgehalt hiermit durch Bezugnahme eingeschlossen ist.

Wie zuvor erwähnt, werden Carbonisierung und Aktivierung in an sich bekannter Art und Weise durchgeführt. Bei der Carbonisierung erfolgt die Umwandlung des kohlenstoffhaltigen polymeren Ausgangsmaterials im wesentlichen zu Kohlenstoff, d. h. mit anderen Worten wird das polymere Ausgangsmaterial verkohlt. Bei der Carbonisierung der zuvor beschriebenen organischen Polymerkügelchen, insbesondere auf Basis von Styrol und Divinylbenzol, die funktionelle chemische Gruppen, welche bei ihrer thermischen Zersetzung zu freien Radikalen und somit zu Vernetzungen führen, insbesondere Sulfonsäuregruppen, enthalten, werden - unter Abspaltung flüchtiger Bestandteile, insbesondere von SO₂ - die funktionellen chemischen Gruppen, insbesondere Sulfonsäuregruppen, zerstört, und es bilden sich freie Radikale, die eine starke Vernetzung bewirken - ohne die es ja keinen Pyrolyserückstand geben würde. Im allgemeinen wird die Carbonisierung unter zumindest vorwiegend inerter Atmosphäre (z. B. Stickstoff) oder allenfalls leicht oxidierender Atmosphäre durchgeführt. Im allgemeinen wird die Carbonisierung beim Temperaturen von 200 bis 900 °C, vorzugsweise 250 bis 850 °C, durchgeführt. Wie zuvor beschrieben, wird die Carbonisierung unter vorwiegend inerter Atmosphäre oder allenfalls leicht oxidierender Atmosphäre durchgeführt; dabei kann es vorteilhaft sein, während der Carbonisierung, insbesondere bei höheren Temperaturen (z. B. im Bereich von etwa 500 bis etwa 600 °C), zu der vorwiegend inerten Atmosphäre eine kleinere Menge an Sauerstoff, insbesondere in Form von Luft (z. B. 1 bis 5 %), zugegeben, um eine Oxidation des carbonisierten Polymerskeletts zu bewirken. Auf diese Weise wird die nachfolgende Aktivierung erleichtert.

Der Carbonisierung schließt sich dann die Aktivierung an, Diese erfolgt gleichermaßen unter an sich bekannten Bedingungen. Das Grundprinzip der Aktivierung besteht darin, einen Teil des bei der Carbonisierung generierten Kohlenstoffs selektiv unter geeigneten Bedingungen abzubauen, Hierdurch entstehen zahlreiche Poren, Spalten und Risse, und die auf die Masseneinheit bezogene Oberfläche nimmt erheblich zu. Bei der Aktivierung wird also ein gezielter Abbrand der zuvor bei der Carbonisierung erzeugten Kohle vorgenommen, Da bei der Carbonisierung Kohlenstoff abgebaut wird, tritt bei diesem Vorgang ein zum Teil erheblicher Substanzverlust ein, welcher unter optimalen Bedingungen gleichbedeutend mit einer Erhöhung der Porosität und Zunahme der inneren Oberfläche und des Porenvolumens ist. Die Aktivierung erfolgt daher unter selektiv bzw. kontrolliert oxidierenden Bedingungen. Übliche Aktivierungsgase sind im allgemeinen Sauerstoff, insbesondere in Form von Luft, Wasserdampf und/oder Kohlendioxid sowie Gemische dieser Aktivierungsgase. Da bei Sauerstoff die Gefahr besteht, daß die Einwirkung nicht nur selektiv, sondern an der Gesamtoberfläche erfolgt - wodurch die Kohle mehr oder weniger stark abbrennt -, gibt man Wasserdampf und Kohlendioxid den Vorzug. Ganz besonders bevorzugt ist Wasserdampf, gegebenenfalls in Mischung mit einem Inertgas (z. B. Stickstoff). Um eine technisch ausreichende Reaktionsgeschwindigkeit zu erzielen, wird die Aktivierung im allgemeinen bei Temperaturen von etwa 800 bis 1.200 °C, insbesondere 850 bis 950 °C, durchgeführt.

Die Reaktionsführung bei der Carbonisierung und Aktivierung ist dem Fachmann als solche bekannt, so daß auf nähere Einzelheiten hier nicht einzugehen werden braucht.

Carbonisierung und/oder Aktivierung können in einem Drehrohr oder aber in einem Fluidisierbett, insbesondere einer Wirbelschicht, durchgeführt werden. Dies ist dem Fachmann gleichermaßen bekannt.

Weiterer Gegenstand der vorliegenden Erfindung ist die nach dem erfindungsgemäßen Verfahren erhältliche Aktivkohle, insbesondere in Kornform, vorzugsweise in Form von Kügelchen. Die erfindungsgemäß hergestellte Aktivkohle zeichnet sich durch eine homogene, gleichmäßige Beladung mit dem gewünschten Imprägniermetall bzw. Dotiermetall aus, und dies homogen über alle Arten von Poren (Makro-, Meso- wie Mikroporen). Insbesondere ist die katalytische Aktivität, insbesondere die Wirkung gegenüber chemischen und biologischen Giftstoffen, im Vergleich zu einer herkömmlich imprägnierten Aktivkohle erhöht.

Erfindungsgemäß bevorzugt ist eine nach dem erfindungsgemäßen Verfahren erhältliche Aktivkohle, welche eine große innere Oberfläche (BET) aufweist, insbesondere von mindestens 500 g/m², vorzugsweise mindestens 750 g/m², besonders bevorzugt mindestens 1.000 g/m², ganz besonders bevorzugt mindestens 1.200 g/m². Vorteilhafterweise liegt die spezifische Oberfläche (BET-Oberfläche) der erfindungsgemäß hergestellten Aktivkohle im Bereich von 500 bis 2.500 g/m², insbesondere 750 bis 2.250 g/m², vorzugsweise 900 bis 2.000 g/m², besonders bevorzugt 1.000 bis 1.750 g/m²,

Im Fall der Verwendung kornförmiger, insbesondere kugelförmiger, organischer Ausgangspolymere wird eine Aktivkohle mit einem hohen Berstdruck erhalten. Dieser beträgt mindestens 2 Newton, insbesondere mindestens 5 Newton, pro Aktivkohlepartikel, insbesondere Aktivkohlekorn oder Aktivkohlekügelchen, und liegt vorteilhafterweise im Bereich von 2 Newton bis 20 Newton, vorzugsweise 5 Newton bis 20 Newton.

Die erfindungsgemäß hergestellte Aktivkohle läßt sich für eine Vielzahl von Anwendungen verwenden, beispielsweise für die Herstellung von Adsorptionsmaterialien, wie Adsorptions(flächen)filtern, Filtermatten, Geruchsfiltern, Flächenfiltern für Schutzbekleidung bzw. Schutzanzüge, insbesondere für den zivilen und/oder militärischen Bereich, Filtern für die Raumluftreinigung, Gasmaskenfiltem und adsorptionsfähigen Trägerstrukturen.

Insbesondere kann die erfindungsgemäß hergestellte Aktivkohle zur Herstellung von Schutzmaterialien aller Art, insbesondere von Schutzanzügen oder anderen Schutzbekleidungsstücken (z. B. Handschuhen, Kopfbedeckungen, Schuhwerk, Socken, Unterbekleidung etc.) gegen biologische und/oder chemische Gifte, wie Kampfstoffe, oder aber für Filter, insbesondere Filter zur Entfernung von Schad-, Gift- und/oder Geruchsstoffen aus Luft- bzw. Gasströmen, eingesetzt werden.

Schließlich sind ein weiterer Gegenstand der vorliegenden Erfindung Adsorptionsmaterialien, insbesondere Filter aller Art, wie Adsorptions(flächen)filter, Geruchsfilter, Flächenfilter für Schutzanzüge, insbesondere für den zivilen oder militärischen Bereich, wie Schutzanzüge oder andere Schutzbekleidungsstücke gegen biologische und/oder chemische Gifte, Filter für die Raumluftreinigung, Gasmaskenfilter, Filter zur Entfernung von Schad-, Gift- und/oder Geruchsstoffen aus Luft- bzw. Gasströmen, Filtermatten und adsorptionsfähigen Trägerstrukturen, welche eine erfindungsgemäß hergestellte Aktivkohle enthalten.

Weitere Ausgestaltungen, Abwandlungen und Variationen der vorliegenden Erfindung sind für den Fachmann beim Lesen der Beschreibung ohne weiteres erkennbar und realisierbar, ohne daß er dabei den Rahmen der vorliegenden Erfindung verläßt.

Die vorliegende Erfindung wird anhand des nachfolgenden Ausführungsbeispiels veranschaulicht, welches die vorliegende Erfindung jedoch keinesfalls beschränken soll.

### AUSFÜHRUNGSBEISPIEL:

### Herstellung der Ausgangspolymere:

a) Erfindungsgemäß für die Carbonisierung und nachfolgende Aktivierung einsetzbares polymeres Ausgangsmaterial wird entsprechend der US-Patentschrift 4 382 142 durch Polymerisation von Styrol und Divinylbenzol in Gegenwart von Benzoylperoxid, einem Porenbildner und Silberbehenat in wäßriger Dispersion durchgeführt. Ein silberionendotiertes porenhaltiges Ausgangspolymer auf der Basis von divinylbenzolvernetztem Styrol in Form kugelförmiger Partikel mit Durchmessern von 0,1 bis 1,5 mm (Gesamtfraktion) mit einem Silberionengehalt von ca. 1 %, bezogen auf die Polymere, wird erhalten.
   Als Vergleichsausgangsmaterial wird eine Mischung ohne Silberbehenat in derselben Weise polymerisiert. Es resultieren die entsprechenden Polymere ohne die Einpolymerisation von Silberionen.
b) Die auf diese Weise hergestellten, divinylbenzolvemetzten Styrolpolymere werden nachfolgend einer Carbonisierung und anschließenden Aktivierung unterzogen. Dazu werden 1 kg der zuvor hergestellten, silberbeladenen Polymerkügelchen (Erfindung) bzw. 1 kg der zuvor hergestellten, nicht mit Silberionen beladenen Polymerkügelchen (Vergleich) mit jeweils einer Mischung aus 1 kg Oleum (25 %) und 1/2 kg konzentrierter Schwefelsäure (96 %) versetzt und in einem säurebeständigen Drehrohrofen der Fa. Plec (Köln) einer thermischen Behandlung in Stickstoffatmosphäre zu Zwecken der Carbonisierung unterworfen, und zwar gemäß folgender thermischer Behandlung:
   - Aufheizen auf 200 °C mit 2 °C/Minute und 20 Minuten Verweilzeit
   - Aufheizen auf 300 °C mit 3 °C/Minute und 10 Minuten Verweilzeit
   - Aufheizen auf 400 °C mit 5 °C/Minute und 10 Minuten Verweilzeit
   - Aufheizen auf 800 °C mit 3 °C/Minute und 20 Minuten Verweilzeit
   - Aufheizen auf 900 °C mit 3 °C/Minute und 10 Minuten Verweilzeit
   Es resultiert jeweils ein carbonisiertes Material, wobei der Gewichtsverlust, bezogen auf die Trockensubstanz, jeweils ca. 10 % beträgt (sowohl erfindungsgemäß wie Vergleichsversuch).
c) Das auf diese Weise carbonisierte Material wird dann im jeweils gleichen Drehrohrofen bei 800 bis 900°C mit einem Gemisch aus 75 % Stickstoff und 25 % Wasserdampf zu Zwecken der Aktivierung begast und nach Abschluß der Aktivierung im Ofen abgekühlt. Während bei den erfmdungsgemäß eingesetzten, mit Silberionen beladenen, carbonisierten Ausgangsmaterialien die Aktivierungsdauer auf insgesamt nur 1 1/2 Stunden verkürzt ist, beträgt sie im Falle des carbonisierten Vergleichsausgangsmaterials, welches keine Silberionen enthält, mehr als 3 1/2 Stunden. Dies zeigt einen weiteren Vorteil der Silberionenbeladung des polymeren Ausgangsmaterials in bezug auf die Durchführung der Aktivkohleherstellung, insbesondere die Aktivierung.
   Im Falle der erfindungsgemäßen Ausgangsmaterialien resultieren ca. 510 g silberionenbeladene Aktivkohle, die mit ca. 1,0 % (Gew.-%) Silberionen, berechnet als Silber und bezogen auf die Aktivkohle, beladen ist (mittlerer Durchmesser ca. 0,6 mm, BET: ca. 1.450 g/m², Berstdruck: > 5 Newton/Kügelchen).
   Im Falle des Vergleichsmaterials resultieren ca. 440 g Aktivkohle, die nachfolgend noch einer Imprägnierung mit Silbernitratlösung und anschließender Trocknung unterworfen wird, so daß im Falle der Vergleichsaktivkohle eine mit ca. 2 % (Gew.-%) Silberionen beladene Aktivkohle, berechnet als Silber und bezogen auf die Aktivkohle, resultiert (mittlerer Durchmesser: ca. 0,6 mm, BET: ca. 1.300 g/m², Berstdruck: > 5 Newton/Kügelchen), d. h. der Silberionengehalt ist etwa doppelt so hoch wie im Fall der erfindungsgemäß hergestellten Aktivkohle.

### Anwendungsbeispiel:

Es wird ein Adsorptionsfiltermaterial mit der erfindungsgemäß hergestellten Aktivkohle hergestellt: Zu diesem Zweck wird eine Trägerschicht mit einem Flächengewicht von 25 g/m² (0,3 mm Dicke) und einer Luftdurchlässigkeit bei einem Strömungswiderstand bei 127 Pascal von 4.250 l · m⁻² · s⁻² mit den erfindungsgemäß hergestellten Aktivkohlekügelchen mit einer Auflagemenge von 180 g/m² mittels Verklebung beaufschlagt und die Adsorptionsschicht auf der der Trägerschicht abgewandten Seite mit einer zweiten Trägerschicht versehen. Es resultiert ein Adsorptionsfiltermaterial mit einem Gesamtflächengewicht von 355 g/m² und einer Gesamtdicke (Querschnitt) von 0,9 mm und mit einer Luftdurchlässigkeit und einem Strömungswiderstand bei 127 Pascal von 6801 · m⁻². s⁻².

Als Vergleichsmaterial dient ein identisch aufgebautes Adsorptionsfiltermaterial mit der Abweichung, daß die Adsorptionsschicht durch die nachträglich imprägnierte Vergleichsaktivkohle gebildet wird, deren Silberionengehalt doppelt so hoch ist wie im Fall der erfindungsgemäß hergestellten Aktivkohle.

Bei dem mit der erfindungsgemäßen Aktivkohle hergestellten Adsorptionsfiltermaterial einerseits und dem Vergleichsadsorptionsfiltermaterial mit der nachträglich imprägnierten Aktivkohle andererseits werden die jeweiligen Barrierewirkungen gegenüber Senfgas und Soman gemäß Methode 2.2 der CRDEC-SP-84010 im Rahmen des sogenannten konvektiven Strömungstests (*convection flow test*) bestimmt. Zu diesem Zweck läßt man bei konstantem Strömungswiderstand mit einer Strömungsgeschwindigkeit von ca. 0,45 cm/s einen Senfgas bzw. Soman enthaltenden Luftstrom auf das Adsorptionsfiltermaterial einwirken und bestimmt die flächenbezogene Durchbruchmenge nach 16 Stunden (80 % relative Luftfeuchtigkeit, 32°C, 10 · 1 µl HD/12,56 cm² bzw. 12 · 1 µl GD/12,56 cm²).

Bei dem Adsorptionsfiltermaterial mit der erfindungsgemäß hergestellten Aktivkohle wird ein Durchbruch in bezug auf Senfgas von nur 1,55 µg/cm² bzw. 1,98 µg/cm² und in bezug auf Soman von nur 1,85 µg/cm² bzw. 1,66 µg/cm² bestimmt, wohingegen bei dem Vergleichsadsorptionsfiltermaterial mit der nachträglich imprägnierten Aktivkohle die Bestimmungswerte deutlich höher liegen und sowohl im Fall von Senfgas als auch im Falle von Soman oberhalb von 5 µg/cm² liegen und somit nicht akzeptabel sind.

Bei Untersuchungen des Adsorptionsfltermaterials mit der erfindungsgemäß hergestellten Aktivkohle in bezug auf die Schutzwirkungen gegenüber Mikroorganismen werden gleichermaßen ausgezeichnete Ergebnisse erhalten: Bei Versuchen zur Überprüfung der biostatischen Eigenschaften nach ASTM E2149-01 mit *Klebsiella pneumoniae* bzw. *Staphylococcus aureus* (jeweils 1,5 - 3,0 · 10⁵ CFU/ml) liegt die prozentuale Reduktion in bezug auf diese Erreger nach 24 Stunden bei dem Adsorptionsfiltermaterial mit der erfindungsgemäß hergestellten Aktivkohle in beiden Fällen oberhalb von 99 %, wohingegen im Falle des Vergleichsmaterials mit der nachträglich imprägnierten Aktivkohle diese Werte bei nur 70 % bzw. 75 % liegen. Dies zeigt, daß auch die biologische Schutzfunktion aufgrund der Anwesenheit der erfindungsgemäß hergestellten Aktivkohle verbessert ist.

Die vorstehenden Tests belegen die verbesserte Leistungsfähigkeit der erfindungsgemäß hergestellten Aktivkohle mit der katalytisch aktiven Komponente gegenüber einer nachträglich imprägnierten Vergleichsaktivkohle. Vergleichbare Ergebnisse werden mit erfindungsgemäß hergestellten Aktivkohlen erhalten, bei denen anstelle einer Silberverbindung eine Kupferverbindung (Kupfermethacrylat) bzw. eine Mischung aus Kupfer- und Silberverbindung (Silberbehenat und Kupfermethacrylat) eingesetzt wird.

## Patentansprüche

1. Verfahren zur Herstellung von Aktivkohle mit katalytischer Aktivität durch Carbonisierung und nachfolgende Aktivierung kohlenstoffhaltiger organischer Polymere,
**dadurch gekennzeichnet,**
**daß** kohlenstoffhaltige organische Polymere, in die bei deren Herstellung mindestens ein Metall, vorzugsweise in Form eines Metallatoms und/oder Metallions, einpolymerisiert worden ist, einer Carbonisierung und nachfolgenden Aktivierung unterzogen werden, so daß eine mit dem Metall, insbesondere Metallatom und/oder Metallion, beladene Aktivkohle resultiert, wobei das Metall, insbesondere Metallatom und/oder Metallion, dem Polymerisationsgemisch zugesetzt und die Polymerisation in Gegenwart des Metalls, insbesondere Metallatoms und/oder Metallions, durchgeführt wird.

2. Verfahren nach Anspruch 1, **dadurch gekennzeichnet, daß** die eingesetzten Polymere kornförmig, insbesondere kugelförmig, ausgebildet sind, vorzugsweise mit mittleren Partikeldurchmessern im Bereich von 0,01 bis 2,0 mm, insbesondere 0,05 bis 1,5 mm, vorzugsweise 0,1 bis 1,0 mm.

3. Verfahren nach Anspruch 1 oder 2, **dadurch gekennzeichnet, daß** die Polymere ausgewählt sind aus der Gruppe von Polystyrolpolymeren, insbesondere Polystyrol/Acrylat-Copolymeren und Polystyrol/Divinylbenzol-Copolymeren, vorzugsweise divinylbenzolvemetzten Polystyrolen; Formaldehyd/Phenolharz-Copolymeren, insbesondere formaldehydvernetzten Phenolharzen; Cellulose, insbesondere Perlcellulose; sowie deren Mischungen, und/oder daß als Polymere Polystyrolpolymere, insbesondere Polystyrol/Divinylbenzol-Copolymere, vorzugsweise divinylbenzolvernetzte Polystyrole, eingesetzt werden, insbesondere mit einem Divinylbenzolgehalt von 1 bis 20 Gew.-%, vorzugsweise 4 bis 18 Gew.-%, bezogen auf die Polymere.

4. Verfahren nach einem oder mehreren der vorangehenden Ansprüche, **dadurch gekennzeichnet, daß** das oder die Metalle, insbesondere das oder die Metallatome und/oder Metallionen, vorzugsweise das oder die Metallionen, dem Polymerisationsgemisch in Form einer in dem Polymerisationsgemisch löslichen oder zumindest dispergierbaren Metallverbindung, bevorzugt einer organischen Verbindung des oder der entsprechenden Metalle, insbesondere Metallsalzen organischer Säuren, zugesetzt werden und/oder daß das Polymer das oder die Metalle, insbesondere Metallatome und/oder Metallionen, in Mengen von 0,001 bis 10 Gew.-%, insbesondere 0,005 bis 5 Gew.-%, bevorzugt 0,01 bis 3 Gew.-%, bezogen auf das Polymer, enthält.

5. Verfahren nach einem oder mehreren der vorangehenden Ansprüche, **dadurch gekennzeichnet, daß** das Polymer durch Dispersions- oder Emulsionspolymerisation, insbesondere radikalische Polymerisation, hergestellt wird und/oder daß das Metall, insbesondere Metallatom und/oder Metallion, ausgewählt ist aus der Gruppe von Kupfer, Silber, Cadmium, Platin, Palladium, Rhodium, Zink, Quecksilber, Titan, Zirkonium und/oder Aluminium sowie deren Ionen und/oder Salzen, bevorzugt Kupfer und Silber sowie deren Ionen und/oder Salzen.

6. Verfahren nach einem oder mehreren der vorangehenden Ansprüche, **dadurch gekennzeichnet, daß** das Polymer chemische Gruppen enthält, die bei ihrer chemischen Zersetzung, insbesondere unter Carbonisierungsbedingungen, zu freien Radikalen und somit zu Vernetzungen führen, insbesondere Sulfonsäure-und/oder Isocyanatgruppen, vorzugsweise Sulfonsäuregruppen, insbesondere wobei die chemischen Gruppen, insbesondere Sulfonsäuregruppen, erst vor und/oder bei der Carbonisierung eingeführt werden, insbesondere durch Zugabe eines Sulfonierungsreagenzes, vorzugsweise SO₃, bevorzugt in Form von insbesondere konzentrierter Schwefelsäure und/oder Oleum, besonders bevorzugt in Form einer Mischung von konzentrierter Schwefelsäure und Oleum.

7. Verfahren nach einem oder mehreren der vorangehenden Ansprüche, **dadurch gekennzeichnet, daß** die Carbonisierung und die Aktivierung jeweils in an sich bekannter Weise durchgeführt werden, insbesondere wobei die Carbonisierung bei Temperaturen von 200 bis 900 °C, vorzugsweise 250 bis 850 °C, insbesondere unter vorwiegend inerter Atmosphäre, durchgeführt wird und/oder insbesondere wobei die Aktivierung bei Temperaturen von 800 bis 1.200 °C, insbesondere 850 bis 950 °C, insbesondere unter inerter oder leicht oxidierender Atmosphäre, vorzugsweise in Gegenwart von Wasserdampf, durchgeführt wird.

8. Aktivkohle, insbesondere in Kornform, vorzugsweise in Form von Kügelchen, erhältlich gemäß dem Verfahren nach einem oder mehreren der vorangehenden Ansprüche.

9. Aktivkohle nach Anspruch 8, **gekennzeichnet durch** eine innere Oberfläche (BET-Oberfläche) von mindestens 500 m²/g, insbesondere mindestens 750 m²/g, vorzugsweise mindestens 1.000 m²/g, besonders bevorzugt mindestens 1.200 m²/g, insbesondere im Bereich von 500 bis 2.500 m²/g, insbesondere 750 bis 2.250 m²/g, vorzugsweise 900 bis 2.000 m²/g, besonders bevorzugt 1.000 bis 1.750 m²/g, und/oder **gekennzeichnet durch** einen Berstdruck von mindestens 2 Newton, insbesondere mindestens 5 Newton, insbesondere im Bereich von 2 Newton bis 20 Newton, vorzugsweise 5 Newton bis 20 Newton, pro Aktivkohlepartikel, insbesondere Aktivkohlekorn oder Aktivkohlekügelchen.

10. Verwendung einer Aktivkohle, erhältlich gemäß dem Verfahren nach einem oder mehreren der Ansprüche 1 bis 7, bzw. einer Aktivkohle gemäß den Ansprüchen 8 und 9 zur Herstellung von Adsorptionsmaterialien wie Adsorptions(flächen)filtern, Filtermatten, Geruchsfiltern, Flächenfiltern für Schutzanzüge, insbesondere für den zivilen und/oder militärischen Bereich, Filtern für die Raumluftreinigung, Gasmaskenfiltern und adsorptionsfähigen Trägerstrukturen, oder für Schutzmaterialien, insbesondere Schutzanzüge oder andere Schutzbekleidungsstücke gegen biologische und/oder chemische Gifte, wie Kampfstoffe, oder für Filter, insbesondere Filter zur Entfernung von Schad-, Gift- und/oder Geruchsstoffen aus Luft- bzw. Gasströmen.

11. Adsorptionsmaterialien, insbesondere Filter aller Art, wie Adsorptions(flächen)-filter, Geruchsfilter, Flächenfilter für Schutzanzüge, insbesondere für den zivilen und/oder militärischen Bereich, wie Schutzanzüge oder andere Schutzbekleidungsstücke gegen biologische und/oder chemische Gifte, Filter für die Raumluftreinigung, Gasmaskenfilter, Filter zur Entfernung von Schad-, Gift- und/oder Geruchsstoffen aus Luft- bzw. Gasströmen, Filtermatten und adsorptionsfähigen Trägerstrukturen, enthaltend Aktivkohle, erhältlich gemäß dem Verfahren nach einem der Ansprüche 1 bis 7, bzw. enthaltend eine Aktivkohle gemäß den Ansprüchen 8 und 9.

## Claims

1. Process for producing activated carbon having catalytic activity by carbonization and subsequent activation of carbonaceous organic polymers,
**characterized in**
**that** carbonaceous organic polymers into which, in the course of their formation, at least one metal, preferably in the form of a metal atom and/or of a metal ion, has been polymerized are subjected to a carbonization and subsequent activation, thus forming an activated carbon loaded with the metal, in particular metal atom and/or metal ion, wherein the metal, in particular metal atom and/or metal ion, is added to the polymerization mixture and the polymerization is carried out in the presence of the metal, in particular metal atom and/or metal ion.

2. Process according to claim 1, **characterized in that** the polymers used are granular and in particular spherical and preferably have average particle diameters in the range from 0.01 to 2.0 mm, in particular in the range from 0.05 to 1.5 mm and preferably in the range from 0.1 to 1.0 mm.

3. Process according to claim 1 or 2, **characterized in that** the polymers are selected from the group of polystyrene polymers, in particular polystyrene-acrylate copolymers and polystyrene-divinylbenzene copolymers, preferably divinylbenzene-crosslinked polystyrenes; formaldehyde-phenolic resin copolymers, in particular formaldehyde-crosslinked phenolic resins; cellulose, in particular bead cellulose; and also mixtures thereof, and/or **in that** polystyrene polymers, in particular polystyrene-divinyl-benzene copolymers, preferably divinylbenzene-crosslinked polystyrenes, in particular having a divinylbenzene content of 1 % to 20 % by weight and preferably 4 % to 18 % by weight, based on the polymers, are used as polymers.

4. Process according to one or more of the preceding claims, **characterized in that** the metal or metals, in particular the metal atom or atoms and/or metal ion or ions, preferably the metal ion or ions, are added to the polymerization mixture in the form of a metal compound soluble or at least dispersible in the polymerization mixture, preferably in the form of an organic compound of the corresponding metal or metals, in particular metal salts of organic acids and/or **in that** the polymer contains the metal or metals, in particular metal atoms and/or metal ions, in amounts of 0.001 % to 10 % by weight, in particular 0.005 % to 5 % by weight and preferably 0.01 % to 3 % by weight, based on the polymer.

5. Process according to one or more of the preceding claims, **characterized in that** the polymer is formed by dispersion or emulsion polymerization, in particular free radical polymerization and/or **in that** the metal, in particular metal atom and/or metal ion, is selected from the group of copper, silver, cadmium, platinum, palladium, rhodium, zinc, mercury, titanium, zirconium and/or aluminium and also their ions and/or salts, preferably copper and silver and also their ions and/or salts.

6. Process according to one or more of the preceding claims, **characterized in that** the polymer contains chemical groups which, when chemically decomposed, in particular under carbonization conditions, lead to free radicals and thus to crosslinks, in particular sulphonic acid and/or isocyanate groups, preferably sulphonic acid groups, wherein the chemical groups, in particular sulphonic acid groups, are not introduced until before and/or during the carbonization, in particular by addition of a sulphonating reagent, preferably SO₃, more preferably in the form of, in particular, concentrated sulphuric acid and/or oleum, even more preferably in the form of a mixture of concentrated sulphuric acid and oleum.

7. Process according to one or more of the preceding claims, **characterized in that** the carbonization and the activation are each carried out in a conventional manner, in particular wherein the carbonization is carried out at temperatures of 200 to 900 °C and preferably 250 to 850 °C, in particular under predominantly inert atmosphere and/or in particular wherein the activation is carried out at temperatures of 800 to 1.200 °C and in particular 850 to 950 °C, in particular under inert or slightly oxidizing atmosphere, preferably in the presence of water vapour.

8. Activated carbon, in particular in granule form, preferably in the form of spherules, obtainable by the process according to one or more of the preceding claims.

9. Activated carbon according to claim 8, **characterized by** an internal surface area (BET surface area) of at least 500 m²/g, in particular of at least 750 m²/g, preferably at least 1.000 m²/g, more preferably at least 1.200 m²/g, in particular in the range from 500 to 2.500 m²/g, in particular in the range from 750 to 2.250 m²/g, preferably in the range from 900 to 2.000 m²/g and more preferably in the range from 1.000 to 1.750 m²/g, and/or **characterized by** a bursting pressure of at least 2 newtons, in particular at least 5 newtons, in particular in the range from 2 newtons to 20 newtons, and preferably from 5 newtons to 20 newtons, per activated carbon particle, in particular activated carbon granule or activated carbon spherule.

10. Use of an activated carbon obtainable by the process according to one or more of claims 1 to 7, or of an activated carbon according to claims 8 and 9 for producing adsorptive materials such as adsorptive (sheet) filters, filtering mats, odour filters, sheet filters for protective suits, in particular for the civil and/or military sector, filters for indoor air cleaning, gas mask filters and adsorption-capable supporting structures, or for protective materials, in particular protective suits or other protective apparel items against biological and/or chemical poisons, such as warfare agents, or for filters, in particular filters for removing noxiant, toxicant and/or odorant materials from air or gas streams.

11. Adsorptive materials, in particular filters of any kind, such as adsorptive (sheet) filters, odour filters, sheet filters for protective suits, in particular for the civil and/or military sector, such as protective suits or other protective apparel items against biological and/or chemical poisons, filters for indoor air cleaning, gas mask filters, filters for removing noxiant, toxicant and/or odorant materials from air or gas streams, filtering mats and adsorption-capable supporting structures, containing activated carbon obtainable by the process according to any one of claims 1 to 7, or containing an activated carbon according to claims 8 and 9.

## Revendications

1. Procédé de préparation de charbon actif présentant une activité catalytique par la carbonisation et l'activation subséquente de polymères organiques carbonés,
**caractérisé**
**en ce que** des polymères organiques carbonés dans lesquels, lors de leur préparation, au moins un métal, de préférence sous la forme d'un atome métallique et/ou d'un ion métallique, a été incorporé par polymérisation, sont soumis à une carbonisation et à une activation subséquente de telle sorte qu'il en résulte un charbon actif chargé du métal, en particulier de l'atome métallique et/ou de l'ion métallique, où le métal, en particulier l'atome métallique et/ou l'ion métallique, est ajouté au mélange de polymérisation et la polymérisation est réalisée en présence du métal, en particulier de l'atome métallique et/ou de l'ion métallique.

2. Procédé selon la revendication 1, **caractérisé en ce que** les polymères utilisés sont de forme granulaire, en particulier de forme sphérique, de préférence avec des diamètres de particules moyens dans la plage de 0,01 à 2,0 mm, en particulier de 0,05 à 1,5 mm, de préférence de 0,1 à 1,0 mm.

3. Procédé selon la revendication 1 ou 2, **caractérisé en ce que** les polymères sont choisis parmi le groupe de polymères polystyrène, en particulier de copolymères polystyrène/acrylate et de copolymères polystyrène/divinylbenzène, de préférence de polystyrènes réticulés par du divinylbenzène ; de copolymères formaldéhyde/résine phénolique, en particulier de résines phénoliques réticulées par du formaldéhyde ; de la cellulose, en particulier de la cellulose en perles ; ainsi que de leurs mélanges, et/ou **en ce que** l'on utilise, en tant que polymères, des polymères polystyrène, en particulier des copolymères polystyrène/divinylbenzène, de préférence des polystyrènes réticulés par du divinylbenzène, en particulier avec une teneur en divinylbenzène de 1 à 20 % en poids, de préférence de 4 à 18 % en poids, par rapport aux polymères.

4. Procédé selon l'une ou plusieurs des revendications précédentes, **caractérisé en ce que** le ou les métaux, en particulier le ou les atomes métalliques et/ou les ions métalliques, de préférence le ou les ions métalliques, sont ajoutés au mélange de polymérisation sous la forme d'un composé métallique soluble ou au moins dispersible dans le mélange de polymérisation, de préférence d'un composé organique du ou des métaux correspondants, en particulier de sels métalliques d'acides organiques, et/ou **en ce que** le polymère comprend le ou les métaux, en particulier les atomes métalliques et/ou les ions métalliques, en des quantités de 0,001 à 10 % en poids, en particulier de 0,005 à 5 % en poids, de préférence de 0,01 à 3 % en poids, par rapport au polymère.

5. Procédé selon l'une ou plusieurs des revendications précédentes, **caractérisé en ce que** le polymère est préparé par polymérisation en dispersion ou en émulsion, en particulier par polymérisation radicalaire, et/ou **en ce que** le métal, en particulier l'atome métallique et/ou l'ion métallique, est choisi parmi le groupe du cuivre, de l'argent, du cadmium, du platine, du palladium, du rhodium, du zinc, du mercure, du titane, du zirconium et/ou de l'aluminium ainsi que de leurs ions et/ou sels, de préférence du cuivre et de l'argent ainsi que de leurs ions et/ou sels.

6. Procédé selon l'une ou plusieurs des revendications précédentes, **caractérisé en ce que** le polymère renferme des groupes chimiques qui conduisent, lors de leur décomposition chimique, en particulier dans des conditions de carbonisation, à des radicaux libres et ainsi à des réticulations, en particulier des groupes acide sulfonique et/ou isocyanate, de préférence des groupes acide sulfonique, où en particulier les groupes chimiques, en particulier les groupes acide sulfonique, ne sont introduits qu'avant et/ou sont introduits lors de la carbonisation, en particulier par l'addition d'un réactif de sulfonation, de préférence le SO₃, de préférence sous la forme, en particulier, d'acide sulfurique concentré et/ou d'oléum, particulièrement préférablement sous la forme d'un mélange d'acide sulfurique concentré et d'oléum.

7. Procédé selon l'une ou plusieurs des revendications précédentes, **caractérisé en ce que** la carbonisation et l'activation sont chacune réalisées d'une façon connue en soi, en particulier où la carbonisation est réalisée à des températures de 200 à 900 °C, de préférence de 250 à 850 °C, en particulier sous une atmosphère principalement inerte, et/ou en particulier où l'activation est réalisée à des températures de 800 à 1.200 °C, en particulier de 850 à 950 °C, en particulier sous une atmosphère inerte ou légèrement oxydante, de préférence en présence de vapeur d'eau.

8. Charbon actif, en particulier sous forme granulaire, de préférence sous la forme de sphérules, susceptible d'être obtenu conformément au procédé selon l'une ou plusieurs des revendications précédentes.

9. Charbon actif selon la revendication 8, **caractérisé par** une surface interne (surface BET) d'au moins 500 m²/g, en particulier d'au moins 750 m²/g, de préférence d'au moins 1.000 m²/g, particulièrement préférablement d'au moins 1.200 m²/g, en particulier dans la plage de 500 à 2.500 m²/g, en particulier de 750 à 2.250 m²/g, de préférence de 900 à 2.000 m²/g, particulièrement préférablement de 1.000 à 1.750 m²/g, et/ou **caractérisé par** une pression d'éclatement d'au moins 2 Newton, en particulier d'au moins 5 Newton, en particulier dans la plage de 2 Newton à 20 Newton, de préférence de 5 Newton à 20 Newton, par particule de charbon actif, en particulier par grain de charbon actif ou par sphérule de charbon actif.

10. Utilisation d'un charbon actif, susceptible d'être obtenu conformément au procédé selon l'une ou plusieurs des revendications 1 à 7, ou d'un charbon actif selon les revendications 8 et 9 pour la production de matériaux adsorbants tels que des filtres (plats) d'adsorption, des mats filtrants, des filtres d'odeurs, des filtres plats pour des combinaisons de protection, en particulier pour le secteur civil et/ou militaire, des filtres pour la purification de l'air intérieur, des filtres pour masques à gaz et des structures de support aptes à l'adsorption, ou pour des matériaux de protection, en particulier des combinaisons de protection ou d'autres articles d'habillement de protection contre des poisons biologiques et/ou chimiques, tels que des agents de combat, ou pour des filtres, en particulier des filtres pour l'élimination de substances nocives, toxiques et/ou odorantes de courants d'air ou de gaz.

11. Matériaux adsorbants, en particulier des filtres de tout type, tels que des filtres (plats) d'adsorption, des filtres d'odeurs, des filtres plats pour des combinaisons de protection, en particulier pour le secteur civil et/ou militaire, telles que des combinaisons de protection ou d'autres articles d'habillement de protection contre des poisons biologiques et/ou chimiques, des filtres pour la purification de l'air intérieur, des filtres pour masques à gaz, des filtres pour l'élimination de substances nocives, toxiques et/ou odorantes de courants d'air ou de gaz, des mats filtrants et des structures de support aptes à l'adsorption, contenant du charbon actif, susceptible d'être obtenu conformément au procédé selon l'une quelconque des revendications 1 à 7, ou contenant un charbon actif selon les revendications 8 et 9.
